# EUROPÄISCHE PATENTSCHRIFT

(11) **EP 1 248 521 B1**
(45) Veröffentlichungstag und Bekanntmachung des Hinweises auf die Patenterteilung: **30.03.2005**
(21) Anmeldenummer: 00993489.4
(22) Anmeldetag: 11.12.2000
(51) Int. Cl.: A01N 43/72

(54) **SCHÄDLINGSBEKÄMPFUNGSMITTEL/DEPSIPEPTIDE**
PEST CONTROL AGENTS / DEPSIPEPTIDES
DEPSIPEPTIDES PARASITICIDES

(30) Priorität: 22.12.1999 DE 19962145
(43) Veröffentlichungstag der Anmeldung: 16.10.2002
(73) Patentinhaber: Bayer CropScience AG, 40789 Monheim (DE)
(72) Erfinder: DYKER, Hubert, 51503 Rösrath (DE); ANDERSCH, Wolfram, 51469 Bergisch Gladbach (DE); ERDELEN, Christoph, 42799 Leichlingen (DE); LÖSEL, Peter, 51371 Leverkusen (DE); NAUEN, Ralf, 40764 Langenfeld (DE)
(86) Internationale Anmeldenummer: PCT/EP2000/012486
(87) Internationale Veröffentlichungsnummer: WO 2001/045512

(56) Entgegenhaltungen:
- EP-A- 0 634 408
- WO-A-99/66794
- DE-A- 19 930 076
- DATABASE WPI Week 199346 Derwent Publications Ltd., London, GB; AN 1993-365092 XP002163697 & JP 05 271013 A (MEIJI SEIKA KAISHA), 19. Oktober 1993 (1993-10-19) in der Anmeldung erwähnt

## Beschreibung

Die vorliegende Erfindung betrifft die Verwendung von bestimmten 24-gliedrigen Cyclodepsipeptiden zur Bekämpfung von tierischen Schädlingen in Veterinärmedizin, Hygiene, Landwirtschaft, Forsten und Materialschutz sowie Schädlingsbekämpfungsmittel, die diese Depsipeptide enthalten.

Cyclische Depsipeptide sowie ihre Herstellung und Verwendung als Parasitizide gegen Helminthen, Nematoden und Trematoden in Tieren (Endoparasitizide) sind bereits Gegenstand zahlreicher Veröffentlichungen.

Beispielsweise ist ein Cyclodepsipeptid mit der Bezeichnung PF 1022 und seine Wirkung gegen Endoparasiten bekannt (EP-A 382 173 und EP-A 503 538). Weitere cyclische Depsipeptide (Cyclooktadepsipeptide: WO 98/55 469; WO 98/43 965; WO 93/19 053; EP-A 634 408; WO 94/19 334; WO 95/07 272; EP-A 626 375; EP-A 626 376; EP-A 664 297; EP 634 408; EP-A 718 298; WO 97/09 331; Cyclohexadepsipeptide: WO 93/25 543; WO 95/27 498; EP-A 658 551; Cyclotetradepsipeptide: EP-A 664 297; Dioxomorpholine: WO 96/38 165; JP 08 225 552) und offenkettige Depsipeptide (EP-A 657 171; EP-A 657 172; EP-A 657 173; WO 97/07 093) und ihre endoparasitizide Wirkung sind beschrieben.

Es ist auch bereits bekannt, dass bestimmte 24-gliedrige Cyclodepsipeptide, beispielsweise Bassianolid und PF1022A, eine Insektizide Aktivität gegen Seidenraupen aufweisen (vgl. M. Kanaoka et al., Agric. Biol. Chem. 43 (5), 1979, S. 1079-83; JP 05 271 013).

Die insektizide Wirksamkeit dieser vorbekannten Verbindungen ist jedoch, insbesondere bei niedrigen Aufwandmengen und -konzentrationen nicht in allen Anwendungsgebieten völlig zufriedenstellend.

Die Erfindung betrifft ein Mittel zur Bekämpfung von tierischen Schädlingen, gekennzeichnet durch einen Gehalt von mindestens einer Verbindung der Formel (I) 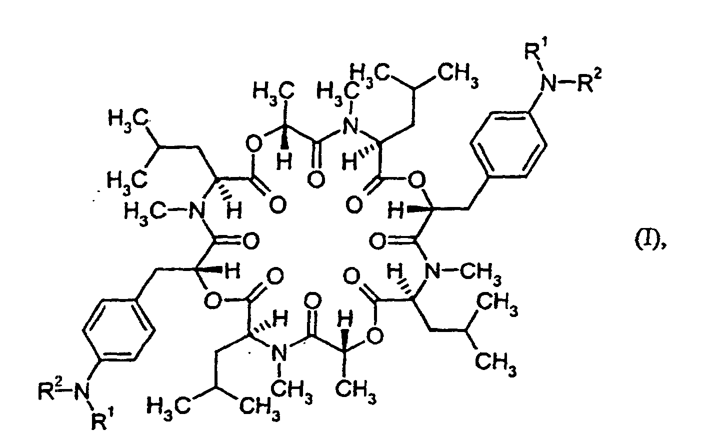 in welcher
- R¹ und R²: jeweils für C₁₋₆Alkyl, C₂₋₆-Alkenyl, ω-C₁₋₄-Alkoxy-C₁₋₆-alkyl, ω-Fluor-C₁₋₆-alkyl, ω-Chlor-C₁₋₆-alkyl, ω-Brom-C₁₋₆-alkyl, gegebenenfalls durch Fluor, Chlor, Methyl, Methoxy ein bis dreifach substituiertes Phenyl-C₁₋₆-alkyl stehen; oder
- R¹ und R²: gemeinsam mit dem Stickstoffatom, an das sie gebunden sind, für ein oder zweifach durch C₁₋₄-Alkyl, Phenoxymethyl, Phenyl, Tolyl, Xylyl, Fluorphenyl oder Chlorphenyl substituiertes Morpholino, durch -CH₂-, -(CH₂)₂- oder -(CH₂)₃- 2,6- oder 3,5-überbrücktes Morpholino, für ein oder zweifach durch C₁₋₄-Alkyl, Phenoxymethyl, Phenyl, Tolyl, Xylyl, Fluorphenyl oder Chlorphenyl substituiertes 1-Pyrrolidinyl, 1-Piperidinyl, 1-Piperazinyl, für gegebenenfalls ein oder zweifach durch C₁₋₄-Alkyl, Phenoxymethyl, Phenyl, Tolyl, Xylyl, Fluorphenyl oder Chlorphenyl substituiertes Hexahydro-1-pyrazinyl, 4-Tetrahydro-1,4-thiazin-1-yl, Hexahydro-1,5-oxazocin-5-yl, wobei gegebenenfalls Stickstoff durch C₁₋₄-Alkylcarbonyl substituiert sein kann, Steht.

Die Verbindungen der allgemeinen Formel (I) können in Abhängigkeit von der Art der Substituenten als geometrische und/oder optische Isomerengemische unterschiedlicher Zusammensetzung auftreten. Die Erfindung betrifft sowohl die reinen Isomeren als auch die Isomerengemische.
- R¹ und R²: stehen ganz besonders bevorzugt jeweils für Methyl, Ethyl, n-Propyl, Isopropyl, n-Butyl, Isobutyl, tert.-Butyl, Allyl, 2-Butenyl, 2-Methoxyethyl, 2-Ethoxyethyl, 3-Methoxy-1-propyl, 4-Methoxy-1-butyl, 2-Chlorethyl, 3-Chlor-1-propyl, 4-Chlor-1-butyl, 2-Bromethyl, 3-Brom-1-propyl, 4-Brom-1-butyl oder Benzyl.
- R¹ und R²: stehen ganz besonders bevorzugt auch gemeinsam mit dem Stickstoffatom, an das sie gebunden sind, für 1-Pyrrol 1-Piperidinyl, 3,5-Dimethylmorpholino, 2-Phenoxymethylmorpholino, 3-Phenylmorpholino, 3-Aza-8-oxa-bicyclo[3.2.1]oct-3-yl, 4-Acetyl-1-piperazinyl, 4-Tetrahydro-1,4-thiazin-1-yl oder Hexahydro-1,5-oxazocin-5-yl.

Die oben aufgeführten allgemeinen oder in Vorzugsbereichen aufgeführten Restedefinitionen bzw. Erläuterungen können untereinander, also auch zwischen den jeweiligen Bereichen und Vorzugsbereichen beliebig kombiniert werden. Sie gelten für die Endprodukte sowie für die Vor- und Zwischenprodukte entsprechend.

Erfindungsgemäß bevorzugt werden die Verbindungen der Formel (I), in welchen eine Kombination der vorstehend als bevorzugt (vorzugsweise) aufgeführten Bedeutungen vorliegt.

Erfindungsgemäß besonders bevorzugt werden die Verbindungen der Formel (I), in welchen eine Kombination der vorstehend als besonders bevorzugt aufgeführten Bedeutungen vorliegt.

Erfindungsgemäß ganz besonders bevorzugt werden die Verbindungen der Formel (I), in welchen eine Kombination der vorstehend als ganz besonders bevorzugt aufgeführten Bedeutungen vorliegt.

Gesättigte oder ungesättigte Kohlenwasserstoffreste wie Alkyl oder Alkenyl können, auch in Verbindung mit Heteroatomen, wie z.B. in Alkoxy, soweit möglich, jeweils geradkettig oder verzweigt sein.

Gegebenenfalls substituierte Reste können einfach oder mehrfach substituiert sein, wobei bei Mehrfachsubstitutionen die Substituenten gleich oder verschieden sein können.

Die erfindungsgemäß verwendbaren Wirkstoffe sind teilweise bekannt. Deren Herstellung ist in der o.a. Literatur beschrieben.

Die neuen Verbindungen der Formel (I) sind ebenfalls Gegenstand dieser Anmeldung.

Weiterhin wurde ein Verfahren zur Herstellung der Verbindungen der Formel (I) 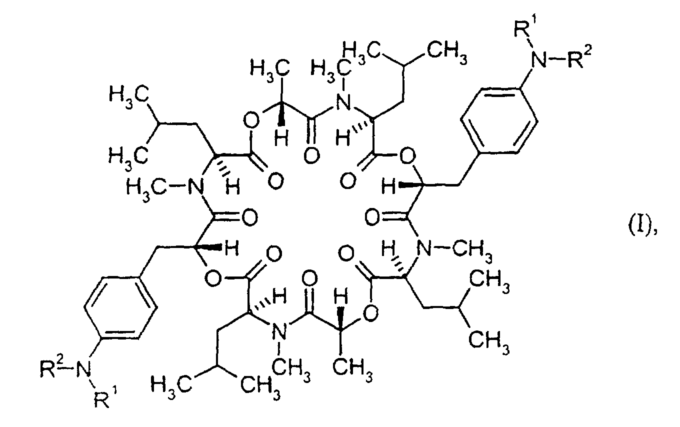 in welcher
- R¹ und R²: die oben angegebenen Bedeutungen haben, gefunden, dadurch gekennzeichnet, dass man eine Verbindung der Formel (II) 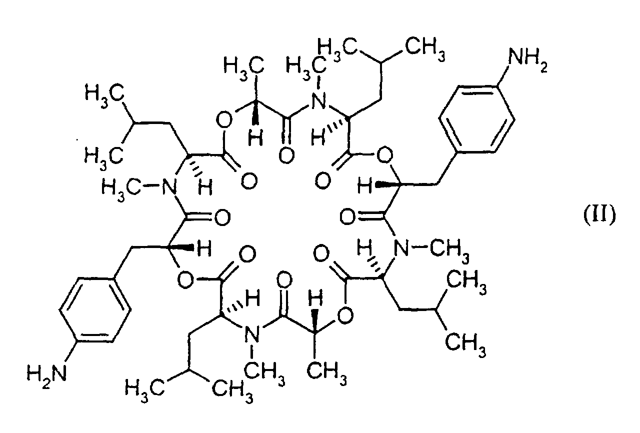
im Falle, dass die Reste R¹ und R² nicht verbunden sind, mit Verbindungen der Formel (III-a)

R¹⁻¹-X (III-a),

in welcher
- R¹⁻¹: die in der Definition der Formel (I) für R¹ und R² genannten Bedeutungen hat, und
im Falle, dass die Reste R¹ und R², wie in der Definition zur Formel (I) angegeben, verbunden sind, mit Verbindungen der Formel (III-b)

X-A-X (III-b),

in welcher
- A: für einen gegebenenfalls substituierten α,ω-Alkylenrest, der auch mono- oder bicyclisch überbrückt sein kann und mit Ausnahme der Bindungsatome zu den Resten X, die gesättigte Kohlenstoffatome sind, ein bis drei weitere Heteroatome aus der Reihe Stickstoff, Sauerstoff und Schwefel enthalten kann steht, und
- X: in den Formeln (III-a) und (III-b) für eine Abgangsgruppe wie beispielsweise Chlor, Brom, Iod, Methylsulfonyloxy, Trifluormethylsulfonyloxy oder Tolylsulfonyloxy steht,
in Gegenwart eines Säurebindemittels und gegebenenfalls eines Verdünnungsmittel und gegebenenfalls eines Reaktionshilfsmittels umsetzt.

A steht dabei bevorzugt und besonders bevorzugt für die den Bedeutungen von R¹ und R² in der Definition von Formel (I) analogen Reste.

Verwendet man beispielsweise 3-Chlorpropyltriflat (und Bis-Aminoverbindung der Formel (II)) als Ausgangsstoffe, so kann der Reaktionsablauf des Verfahrens durch das folgende Formelschema wiedergegeben werden:

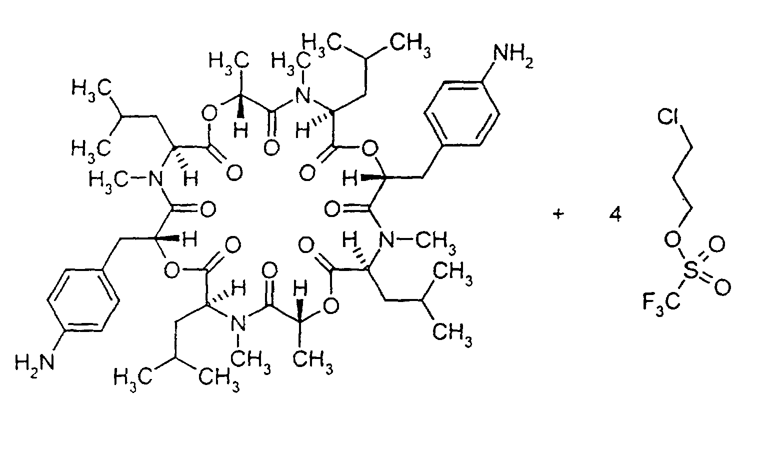

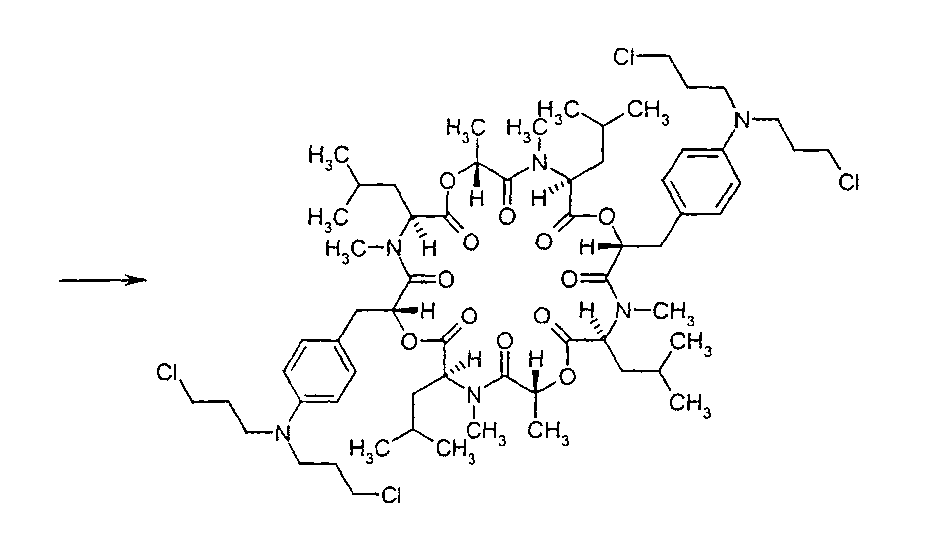

Das zur Durchführung des Verfahrens benötigte Diamin der Formel (II) ist u.a. aus der EP-A 872 481 bekannt und kann wie dort dargestellt hergestellt werden.

Die weiterhin benötigten Verbindungen sind durch die Formeln (III-a) und (III-b) allgemein definiert. In diesen Formeln stehen R¹ bzw. A bevorzugt analog zu den bevorzugten Definitionen der Reste R¹ und R² in der Definition der erfindungsgemäß verwendbaren Verbindungen der Formel (I).

Die Verbindungen der Formeln (III-a) und (III-b) sind kommerziell erhältlich, bekannt oder durch allgemein bekannte Methoden der organischen Chemie herstellbar (s.a. Jerry March,Advanced Organic Chemistry, Wiley Interscience, etc.).

Als Säureakzeptor zur Durchführung des Verfahrens kommen übliche anorganischen oder organischen Basen in Frage. Hierzu gehören vorzugsweise Erdalkalimetall- oder Alkalimetallacetate, -carbonate oder -hydrogencarbonate, wie beispielsweise Natrium-, Kalium-, Calcium- oder Ammoniumacetat; Natrium-, Kalium- oder Ammoniumcarbonat, Natriumhydrogen- oder Kaliumhydrogencarbonat, sowie tertiäre Amine, wie Trimethylamin, Triethylamin, Tributylamin, *N*,*N*-Dimethylanilin, *N,N*-Dimethyl-benzylamin, Pyridin, *N*-Methylpiperidin, *N*-Methylmorpholin, *N*,*N*-Dimethylaminopyridin, Diazabicyclooctan (DABCO), Diazabicyclononen (DBN) oder Diazabicycloundecen (DBU). Bevorzugt verwendet man Natrium-, Kalium- oder Cäsiumcarbonat, Natriumoder Kaliumhydrogencarbonat, Triethylamin, Diisopropylethylamin oder N-Methylmorpholin.

Das Verfahren wird vorzugsweise in Gegenwart eines Verdünnungsmittels durchgeführt. Hierfür kommen Wasser, organische Lösungsmittel und beliebige Mischungen davon in Betracht. Beispielhaft seien genannt: aliphatische, alicyclische oder aromatische Kohlenwasserstoffe, wie beispielsweise Petrolether, Hexan, Heptan, Cyclohexan, Methylcyclohexan, Benzol, Toluol, Xylol oder Decalin; halogenierte Kohlenwasserstoffe, wie beispielsweise Chlorbenzol, Dichlorbenzol, Methylenchlorid, Chloroform, Tetrachlormethan, Dichlor-, Trichlorethan oder Tetrachlorethylen; Ether, wie Diethyl-, Diisopropyl-, Methyl-t-butyl-, Methyl-t-Amylether, Dioxan, Tetrahydrofuran, 1,2-Dimethoxyethan, 1,2-Diethoxyethan, Diethylenglykoldimethylether oder Anisol; Ketone, wie Aceton, Butanon, Methyl-isobutylketon oder Cyclohexanon; Nitrile, wie Acetonitril, Propionitril, n- oder i-Butyronitril oder Benzonitril; Amide, wie Formamid, *N,N*-Dimethylformamid, *N*,*N*-Dimethylacetamid, *N*-Methylformanilid, *N*-Methylpyrrolidon oder Hexamethylphosphorsäuretriamid; N-Oxide wie *N*-Methylmorpholin-N-oxid; Ester wie Methyl-, Ethyl- oder Butylacetat; Sulfoxide, wie Dimethylsulfoxid; Sulfone, wie Sulfolan; Alkohole, wie Methanol, Ethanol, n- oder i-Propanol, n-, iso-, sek- oder tert-Butanol, Ethandiol, Propan-1,2-diol, Ethoxyethanol, Methoxyethanol, Diethylenglykolmonomethylether, Diethylenglykolmonoethylether; Wasser. Bevorzugt sind Propionitril, Acetonitril, Dimethylformamid, Dimethylsulfoxid, Dichlormethan.

Als Reaktionshilfsmittel kann man Alkalimetall- oder quartäre Ammoniumhalogenide wie beispielsweise Lithium-, Natrium-, oder Tetrabutylammoniumiodid einsetzen.

Die Reaktionstemperatur kann bei der Durchführung des Verfahrens innerhalb eines größeren Bereiches variiert werden. Im allgemein arbeitet man bei Temperaturen zwischen 20° und 150°C, bevorzugt bei 50° bis 130°C, besonders bevorzugt bei 80° bis 120°C.

Bei der Durchführung des Verfahrens setzt man pro Mol der Verbindung der Formel (1) 4 bis 20 Mol, vorzugsweise 5 bis 10 Mol monofunktionelle Verbindung der Formcl (III-a) bzw. die Hälfte bifunktionelle Verbindung der Formel (III-b) ein. Die Menge des eingesetzten Säurebindemittels ist nach oben nicht kritisch. Vorzugsweise setzt man eine zur Menge der Verbindung der Formeln (III) äquivalente Menge ein. Letzteres gilt auch für die Menge eines gegebenenfalls zu verwendenden Reaktionshilfsmittels.

Die Umsetzungen können bei Normaldruck oder unter erhöhtem Druck durchgeführt werden. Vorzugsweise wird bei Normaldruck gearbeitet. Die Reaktionsdurchführung, Aufarbeitung und Isolierung der Reaktionsprodukte erfolgt nach allgemein üblichen, bekannten Methoden. Die Endprodukte werden vorzugsweise durch Kristallisation, chromatographische Trennung oder durch Entfernung der flüchtigen Bestandteile, gegebenenfalls im Vakuum, gereinigt (vergl. auch die Herstellungsbeispiele).

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie können vorzugsweise als Pflanzenschutzmittel oder Tierarzneimittel für Nutz- und Hobbytiere sowie in der Stallund Haushaltshygiene eingesetzt werden. Sie sind gegen normal sensible und resistente Arten sowie gegen alle oder einzelne Entwicklungsstadien wirksam. Zu den oben erwähnten Schädlingen gehören:
Aus der Ordnung der Isopoda z.B. Oniscus asellus, Armadillidium vulgare, Porcellio scaber.
Aus dcr Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.
Aus der Ordnung der Siphonaptera z.B. Xenopsylla cheopis, Ceratophyllus spp..
Aus der Ordnung der Arachnida z.B. Scorpio maurus, Latrodectus mactans.
Aus der Ordnung der Acarina z.B. Acarus siro, Argas spp., Omithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäß verwendbaren Wirkstoffe der Formel (I) zeichnen sich insbesondere durch hervorragende Wirkung gegen Lepidopteren wie die Raupen von Spodoptera frugiperda und Heliothis virescens aus.

Die Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, wirkstoff-imprägnierte Naturund synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengeln; als Emulgierund/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexformige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Der erfindungsgemäße Wirkstoff kann in seinen handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Besonders günstige Mischpartner sind z.B. die folgenden:

### Fungizide:

2-Aminobutan; 2-Anilino-4-methyl-6-cyclopropyl-pyrimidin; 2',6'-Dibromo-2-methyl-4'-trifluoromethoxy-4'-trifluoro-methyl-1,3-thiazol-5-carboxanilid; 2,6-Dichloro-N-(4-trifluoromethylbenzyl)-benzamid; (E)-2-Methoxyimino-N-methyl-2-(2-phenoxyphenyl)acetamid; 8-Hydroxyquinolinsulfat; Methyl-(E)-2- {2-[6-(2-cyanophenoxy)-pyrimidin-4-yloxy]-phenyl}-3-methoxyacrylat; Methyl-(E)-methoximino[alpha-(o-tolyloxy)-o-tolyl]acetat; 2-Phenylphenol (OPP), Aldimorph, Ampropylfos, Anilazin, Azaconazol, Benalaxyl, Benodanil, Benomyl, Binapacryl, Biphenyl, Bitertanol, Blasticidin-S, Bromuconazole, Bupirimate, Buthiobate, Calciumpolysulfid, Captafol, Captan, Carbendazim, Carboxin, Chinomethionat (Quinomethionat), Chloroneb, Chloropicrin, Chlorothalonil, Chlozolinat, Cufraneb, Cymoxanil, Cyproconazole, Cyprofuram, Dichlorophen, Diclobutrazol, Diclofluanid, Diclomezin, Dicloran, Diethofencarb, Difenoconazol, Dimethirimol, Dimethomorph, Diniconazol, Dinocap, Diphenylamin, Dipyrithion, Ditalimfos, Dithianon, Dodine, Drazoxolon, Edifenphos, Epoxyconazole, Ethirimol, Etridiazol, Fenarimol, Fenbuconazole, Fenfuram, Fenitropan, Fenpiclonil, Fenpropidin, Fenpropimorph, Fentinacetat, Fentinhydroxyd, Ferbam, Ferimzone, Fluazinam, Fludioxonil, Fluoromide, Fluquinconazole, Flusilazole, Flusulfamide, Flutolanil, Flutriafol, Folpet, Fosetyl-Aluminium, Fthalide, Fuberidazol, Furalaxyl, Furmecyclox, Guazatine, Hexachlorobenzol, Hexaconazol, Hymexazol, Imazalil, Imibenconazol, Iminoctadin, Iprobenfos (IBP), Iprodion, Isoprothiolan, Kasugamycin, Kupfer-Zubereitungen, wie: Kupferhydroxid, Kupfernaphthenat, Kupferoxychlorid, Kupfersulfat, Kupferoxid, Oxin-Kupfer und Bordeaux-Mischung, Mancopper, Mancozeb, Maneb, Mepanipyrim, Mepronil, Metalaxyl, Metconazol, Methasulfocarb, Methfuroxam, Metiram, Metsulfovax, Myclobutanil, Nickel-dimethyldithiocarbamat, Nitrothal-isopropyl, Nuarimol, Ofurace, Oxadixyl, Oxamocarb, Oxycarboxin, Pefurazoat, Penconazol, Pencycuron, Phosdiphen, Phthalid, Pimaricin, Piperalin, Polycarbamate, Polyoxin, Probenazol, Prochloraz, Procymidon, Propamocarb, Propiconazole, Propineb, Pyrazophos, Pyrifenox, Pyrimethanil, Pyroquilon, Quintozen (PCNB), Schwefel und Schwefel-Zubereitungen, Tebuconazol, Tecloftalam, Tecnazen, Tetraconazol, Thiabendazol, Thicyofen, Thiophanat-methyl, Thiram, Tolclophos-methyl, Tolylfluanid, Triadimefon, Triadimenol, Triazoxid, Trichlamid, Tricyclazol, Tridemorph, Triflumizol, Triforin, Triticonazol, Validamycin A, Vinclozolin, Zineb, Ziram.

### Bakterizide:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

### Insektizide / Akarizide / Nematizide:

Abamectin, Acephate, Acetamiprid, Acrinathrin, Alanycarb, Aldicarb, Aldoxycarb, Alpha-cypermethrin, Alphamethrin, Amitraz, Avermectin, AZ 60541, Azadirachtin, Azamethiphos, Azinphos A, Azinphos M, Azocyclotin, Bacillus popilliae, Bacillus sphaericus, Bacillus subtilis, Bacillus thuringiensis, Baculoviren, Beauveria bassiana, Beauveria tenella, Bendiocarb, Benfuracarb, Bensultap, Benzoximate, Betacyfluthrin, Bifenazate, Bifenthrin, Bioethanomethrin, Biopermethrin, BPMC, Bromophos A, Bufencarb, Buprofezin, Butathiofos, Butocarboxim, Butylpyridaben, Cadusafos, Carbaryl, Carbofuran, Carbophenothion, Carbosulfan, Cartap, Chloethocarb, Chlorethoxyfos, Chlorfenapyr, Chlorfenvinphos, Chlorfluazuron, Chlormephos, Chlorpyrifos, Chlorpyrifos M, Chlovaporthrin, Cis-Resmethrin, Cispermethrin, Clocythrin, Cloethocarb, Clofentezine, Cyanophos, Cycloprene, Cycloprothrin, Cyfluthrin, Cyhalothrin, Cyhexatin, Cypermethrin, Cyromazine, Deltamethrin, Demeton M, Demeton S, Demeton-S-methyl, Diacloden, Diafenthiuron, Diazinon, Dichlorvos, Diflubenzuron, Dimethoat, Dimethylvinphos, Diofenolan, Disulfoton, Docusat-sodium, Dofenapyn, Eflusilanate, Emamectin, Empenthrin, Endosulfan, Entomopfthora spp., Eprinomectin, Esfenvalerate, Ethiofencarb, Ethion, Ethoprophos, Etofenprox, Etoxazole, Etrimfos, Fenamiphos, Fenazaquin, Fenbutatin oxide, Fenitrothion, Fenothiocarb, Fenoxacrim, Fenoxycarb, Fenpropathrin, Fenpyrad, Fenpyrithrin, Fenpyroximate, Fenvalerate, Fipronil, Fluazinam, Fluazuron, Flubrocythrinate, Flucycloxuron, Flucythrinate, Flufenoxuron, Flutenzine, Fluvalinate, Fonophos, Fosmethilan, Fosthiazate, Fubfenprox, Furathiocarb. Granuloseviren, Halofenozide, HCH, Heptenophos, Hexaflumuron, Hexythiazox, Hydroprene, Imidacloprid, Isazofos, Isofenphos, Isoxathion, Ivermectin, Kempolyederviren, Lambda-cyhalothrin, Lufcnuron, Malathion, Mecarbam, Metaldehyd, Methamidophos, Metharhizium anisopliae, Metharhizium flavoviride, Methidathion, Methiocarb, Methomyl, Methoxyfenozide, Metolcarb, Metoxadiazone, Mevinphos, Milbemectin, Monocrotophos, Moxidectin, Naled. Nitenpyram, Nithiazine, Novaluron, Omethoat, Oxamyl, Oxydemethon M, Paecilomyces fumosoroseus, Parathion A, Parathion M, Permethrin, Phenthoat, Phorat, Phosalone, Phosmet, Phosphamidon, Phoxim, Pirimicarb, Pirimiphos A, Pirimiphos M, Profenofos, Promecarb, Propoxur, Prothiofos, Prothoat, Pymetrozine, Pyraclofos, Pyresmethrin, Pyrethrum, Pyridaben, Pyridathion, Pyrimidifen, Pyriproxyfen, Quinalphos, Ribavirin, Salithion, Sebufos, Selamectin, Silafluofen, Spinosad, Sulfotep, Sulprofos, Tau-fluvalinate, Tcbufenozide, Tebufenpyrad, Tebupirimiphos, Teflubenzuron, Tefluthrin, Temephos, Temivinphos, Terbufos, Tetrachlorvinphos, Theta-cypermethrin, Thiamethoxam, Thiapronil, Thiatriphos, Thiocyclam hydrogen oxalate, Thiodicarb, Thiofanox, Thuringiensin, Tralocythrin, Tralomethrin, Triarathene, Triazamate, Triazophos, Triazuron, Trichlophenidine, Trichlorfon, Triflumuron, Trimethacarb, Vamidothion, Vaniliprole, Verticillium lecanii, YI 5302, Zeta-cypermethrin, Zolaprofos, (1R-cis)-[5-(Phenylmethyl)-3-furanyl]-methyl-3-[(dihydro-2-oxo-3(2H)-furanyliden)-niethyl]-2,2-dimethylcyclopropancarboxylat, (3-Phenoxyphenyl)-methyl-2,2,3,3-tetramethylcyclopropanecarboxylat, 1-[(2-Chlor-5-thiazolyl)-methyl]-tetrahydro-3,5-dimethyl-N-nitro-1,3,5-triazin-2(1H)-imin, 2-(2-Chlor-6-fluorphenyl)-4-[4-(1,1-dimethylethyl)-phenyl-4,5-dihydro-oxazol, 2-(Acetyloxy)-3-dodecyl-1,4-naphthalindion, 2-Chlor-N-[[[4-(1-phenylethoxy)-phenyl]-amino]-carbonyl]-benzamid, 2-Chlor-N-[[[4-(2,2-dichor-1,1-difluorethoxy)-phenyl]-amino]-carbonyl]-benzamid, 3-Methylphenyl-propylcarbamat, 4-[4-(4-Ethoxyphenyl)-4-methylpentyl]-1-fluor-2-phenoxy-benzol, 4-Chlor-2-(1,1-dimethylethyl)-5-[[2-(2,6-dimethyl-4-phenoxyphenoxy)ethyl]thio]-3(2H)-pyridazinon, 4-Chlor-2-(2-chlor-2-methylpropyl)-5-[(6-iod-3-pyridinyl)-methoxy]-3(2H)-pyridazinon, 4-Chlor-5-[(6-chlor-3-pyridinyl)-methoxy]-2-(3,4-dichlorphenyl)-3(2H)-pyridazinon, Bacillus thuringiensis strain EG-2348, Benzoesäure-[2-benzoyl-1-(1,1-dimethylethyl)-hydrazid, Butansäure-2,2-dimethyl-3-(2,4-dichlorphenyl)-2-oxo-1-oxaspiro[4.5]dec-3-en-4-ylester, [3-[(6-Chlor-3-pyridinyl)methyl]-2-thiazolidinyliden]-cyanamid, Dihydro-2-(nitromethylen)-2H-1,3-thiazine-3(4H)-carboxaldehyd, Ethyl-[2-[[1,6-dihydro-6-oxo-1-(phenylmethyl)-4-pyridazinyl]oxy]ethyl]-carbamat, N-(3,4,4-Trifluor- 1-oxo-3-butenyl)-glycin, N-(4-Chlorphenyl)-3-[4-(difluormethoxy)phenyl]-4,5-dihydro-4-phenyl-1H-pyrazol-1-carboxamid, N-[(2-Chlor-5-thiazolyl)methyl]-N'-methyl-N"-nitro-guanidin, N-Methyl-N'-(1-methyl-2-propenyl)-1,2-hydrazindicarbothioamid, N-Methyl-N'-2-propenyl-1,2-hydrazindicarbothioamid, O,O-Diethyl-[2-(dipropylamino)-2-oxoethyl)-ethylphosphoramidothioat.

Auch eine Mischung mit anderen bekannten Wirkstoffen, wie Herbiziden oder mit Düngemitteln und Wachstumsregulatoren ist möglich.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemäßen Wirkstoffe wirken nicht nur gegen Pflanzen-, Hygiene- und Vorratsschädlinge, sondern auch auf dem veterinärmedizinischen Sektor gegen tierische Parasiten (Ektoparasiten) wie Schildzecken, Lederzecken, Räudemilben, Laufmilben, Fliegen (stechend und leckend), parasitierende Fliegenlarven, Läuse, Haarlinge, Federlinge und Flöhe. Zu diesen Parasiten gehören:

Aus der Ordnung der Anoplurida z.B. Haematopinus spp., Linognathus spp., Pediculus spp., Phtirus spp., Solenopotes spp..

Aus der Ordnung der Mallophagida und den Unterordnungen Amblycerina sowie Ischnocerina z.B. Trimenopon spp., Menopon spp., Trinoton spp., Bovicola spp., Werneckiella spp., Lepikentron spp., Damalina spp., Trichodectes spp., Felicola spp..

Aus der Ordnung Diptera und den Unterordnungen Nematocerina sowie Brachycerina z.B. Aedes spp., Anopheles spp., Culex spp., Simulium spp., Eusimulium spp., Phlebotomus spp., Lutzomyia spp., Culicoides spp., Chrysops spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gasterophilus spp., Hippobosca spp., Lipoptena spp., Melophagus spp..

Aus der Ordnung der Siphonapterida z.B. Pulex spp., Ctenocephalides spp., Xenopsylla spp., Ceratophyllus spp..

Aus der Ordnung der Heteropterida z.B. Cimex spp., Triatoma spp., Rhodnius spp., Panstrongylus spp..

Aus der Ordnung der Blattarida z.B. Blatta orientalis, Periplaneta americana, Blattela germanica, Supella spp..

Aus der Unterklasse der Acaria (Acarida) und den Ordnungen der Meta- sowie Mesostigmata z.B. Argas spp., Omithodorus spp., Otobius spp., Ixodes spp., Amblyomma spp., Boophilus spp., Dermacentor spp., Haemophysalis spp., Hyalomma spp., Rhipicephalus spp., Dermanyssus spp., Raillietia spp., Pneumonyssus spp., Sternostoma spp., Varroa spp).,

Aus der Ordnung der Actinedida (Prostigmata) und Acaridida (Astigmata) z.B. Acarapis spp., Cheyletiella spp., Ornithocheyletia spp., Myobia spp., Psorergates spp., Demodex spp., Trombicula spp., Listrophorus spp., Acarus spp., Tyrophagus spp., Caloglyphus spp., Hypodectes spp., Pterolichus spp., Psoroptes spp., Chorioptes spp., Otodectes spp., Sarcoptes spp., Notoedres spp., Knemidocoptes spp., Cytodites spp., Laminosioptes spp..

Die erfindungsgemäßen Wirkstoffe der Formel (I) eignen sich auch zur Bekämpfung von Arthropoden. die landwirtschaftliche Nutztiere, wie z.B. Rinder, Schafe, Ziegen, Pferde, Schweine, Esel, Kamele, Büffel, Kaninchen, Hühner, Puten, Enten, Gänse, Bienen. sonstige Haustiere wie z.B. Hunde, Katzen, Stubenvögel, Aquarienfische sowie sogenannte Versuchstiere, wie z.B. Hamster, Meerschweinchen, Ratten und Mäuse befallen. Durch die Bekämpfung dieser Arthropoden sollen Todesfälle und Leistungsminderungen (bei Fleisch, Milch, Wolle, Häuten, Eiern, Honig usw.) vermindert werden, so dass durch den Einsatz der erfindungsgemäßen Wirkstoffe eine wirtschaftlichere und einfachere Tierhaltung möglich ist.

Die Anwendung der erfindungsgemäßen Wirkstoffe geschieht im Veterinärsektor in bekannter Weise durch enterale Verabreichung in Form von beispielsweise Tabletten, Kapseln, Tränken, Drenchen, Granulaten, Pasten, Boli, des feed-through-Verfahrens, von Zäpfchen, durch parenterale Verabreichung, wie zum Beispiel durch Injektionen (intramuskulär, subcutan, intravenös, intraperitonal u.a.), Implantate, durch nasale Applikation, durch dermale Anwendung in Form beispielsweise des Tauchens oder Badens (Dippen), Sprühens (Spray), Aufgießens (Pour-on und Spot-on), des Waschens, des Einpuderns sowie mit Hilfe von wirkstoffhaltigen Formkörpern, wie Halsbändern, Ohrmarken, Schwanzmarken, Gliedmaßenbändern, Halftern, Markierungsvorrichtungen usw.

Bei der Anwendung für Vieh, Geflügel, Haustiere etc. kann man die Wirkstoffe der Formel (I) als Formulierungen (beispielsweise Pulver, Emulsionen, fließfähige Mittel), die die Wirkstoffe in einer Menge von 1 bis 80 Gew.-% enthalten, direkt oder nach 100 bis 10 000-facher Verdünnung anwenden oder sie als chemisches Bad verwenden.

Außerdem wurde gefunden, dass die erfindungsgemäßen Verbindungen der Formel (I) eine hohe insektizide Wirkung gegen Insekten zeigen, die technische Materialien zerstören.

Beispielhaft und vorzugsweise - ohne jedoch zu limitieren - seien die folgenden Insekten genannt:

### Käfer wie

Hylotrupes bajulus, Chlorophorus pilosis, Anobium punctatum, Xestobium rufovillosum, Ptilinus pecticomis, Dendrobium pertinex, Emobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus

### Hautflügler wie

Sirex juvencus, Urocerus gigas, Urocerus gigas taignus, Urocerus augur

### Termiten wie

Kalotermes flavicollis, Cryptotermes brevis, Heterotermes indicola, Reticulitermes flavipes, Reticulitermes santonensis, Reticulitermes lucifugus, Mastotermes darwiniensis, Zootermopsis nevadensis, Coptotermes formosanus.

Borstenschwänze, wie Lepisma saccharina.

Unter technischen Materialien sind im vorliegenden Zusammenhang nicht-lebende Materialien zu verstehen, wie vorzugsweise Kunststoffe, Klebstoffe, Leime, Papiere und Kartone, Leder, Holz und Holzverarbeitungsprodukte und Anstrichmittel.

Ganz besonders bevorzugt handelt es sich bei dem vor Insektenbefall zu schützenden Material um Holz und Holzverarbeitungsprodukte.

Unter Holz und Holzverarbeitungsprodukten, welche durch das erfindungsgemäße Mittel bzw. dieses enthaltende Mischungen geschützt werden kann, ist beispielhaft zu verstehen: Bauholz, Holzbalken, Eisenbahnschwellen, Brückenteile, Bootsstege, Holzfahrzeuge, Kisten, Paletten, Container, Telefonmasten, Holzverkleidungen, Holzfenster und -türen, Sperrholz, Spanplatten, Tischlerarbeiten oder Holzprodukte, die ganz allgemein beim Hausbau oder in der Bautischlerei Verwendung finden.

Die Wirkstoffe können als solche, in Form von Konzentraten oder allgemein üblichen Formulierungen wie Pulver, Granulate, Lösungen, Suspensionen, Emulsionen oder Pasten angewendet werden.

Die genannten Formulierungen können in an sich bekannter Weise hergestellt werden, z.B. durch Vermischen der Wirkstoffe mit mindestens einem Lösungs- bzw. Verdünnungsmittel, Emulgator, Dispergier- und/oder Binde- oder Fixiermittels, Wasser-Repellent, gegebenenfalls Sikkative und UV-Stabilisatoren und gegebenenfalls Farbstoffen und Pigmenten sowie weiteren Verarbeitungshilfsmitteln.

Die zum Schutz von Holz und Holzwerkstoffen verwendeten insektiziden Mittel oder Konzentrate enthalten den erfindungsgemäßen Wirkstoff in einer Konzentration von 0,0001 bis 95 Gew.-%, insbesondere 0,001 bis 60 Gew.-%.

Die Menge der eingesetzten Mittel bzw. Konzentrate ist von der Art und dem Vorkommen der Insekten und von dem Medium abhängig. Die optimale Einsatzmenge kann bei der Anwendung jeweils durch Testreihen ermittelt werden. Im allgemeinen ist es jedoch ausreichend 0,0001 bis 20 Gew.-%, vorzugsweise 0,001 bis 10 Gew.-%, des Wirkstoffs, bezogen auf das zu schützende Material, einzusetzen.

Als Lösungs- und/oder Verdünnungsmittel dient ein organisch-chemisches Lösungsmittel oder Lösungsmittelgemisch und/oder ein öliges oder ölartiges schwer flüchtiges organisch-chemisches Lösungsmittel oder Lösungsmittelgemisch und/oder ein polares organisch-chemisches Lösungsmittel oder Lösungsmittelgemisch und/oder Wasser, gegebenenfalls mit einem Emulgator und/oder Netzmittel.

Als organisch-chemische Lösungsmittel werden vorzugsweise ölige oder ölartige Lösungsmittel mit einer Verdunstungszahl über 35 und einem Flammpunkt oberhalb 30°C, vorzugsweise oberhalb 45°C, eingesetzt. Als derartige schwerflüchtige, wasserunlösliche, ölige und ölartige Lösungsmittel werden entsprechende Mineralöle oder deren Aromatenfraktionen oder mineralölhaltige Lösungsmittelgemische, vorzugsweise Testbenzin, Petroleum und/oder Alkylbenzol verwendet.

Vorteilhaft gelangen Mineralöle mit einem Siedebereich von 170 bis 220°C, Testbenzin mit einem Siedebereich von 170 bis 220°C, Spindelöl mit einem Siedebereich von 250 bis 350°C, Petroleum bzw. Aromaten vom Siedebereich von 160 bis 280°C, Terpentinöl und dgl. zum Einsatz.

In einer bevorzugten Ausführungsform werden flüssige aliphatische Kohlenwasserstoffe mit einem Siedebereich von 180 bis 210°C oder hochsiedende Gemische von aromatischen und aliphatischen Kohlenwasserstoffen mit einem Siedebereich von 180 bis 220°C und/oder Spindelöl und/oder Monochlomaphthalin, vorzugsweise α-Monochlornaphthalin, verwendet.

Die organischen schwerflüchtigen öligen oder ölartigen Lösungsmittel mit einer Verdunstungszahl über 35 und einem Flammpunkt oberhalb 30°C, vorzugsweise oberhalb 45°C, können teilweise durch leicht oder mittelflüchtige organisch-chemische Lösungsmittel ersetzt werden, mit der Maßgabe, dass das Lösungsmittelgemisch ebenfalls eine Verdunstungszahl über 35 und einen Flammpunkt oberhalb 30°C, vorzugsweise oberhalb 45°C, aufweist und dass das Insektizid-Fungizid-Gemisch in diesem. Lösungsmittelgemisch löslich oder emulgierbar ist.

Nach einer bevorzugten Ausführungsform wird ein Teil des organisch-chemischen Lösungsmittel oder Lösungsmittelgemisches durch ein aliphatisches polares organisch-chemisches Lösungsmittel oder Lösungsmittelgemisch ersetzt. Vorzugsweise gelangen Hydroxyl- und/oder Ester- und/oder Ethergruppen enthaltende aliphatische organisch-chemische Lösungsmittel wie beispielsweise Glykolether, Ester oder dgl. zur Anwendung.

Als organisch-chemische Bindemittel werden im Rahmen der vorliegenden Erfindung die an sich bekannten wasserverdünnbaren und/oder in den eingesetzten organisch-chemischen Lösungsmitteln löslichen oder dispergier- bzw. emulgierbaren Kunstharze und/oder bindende trocknende Öle, insbesondere Bindemittel bestehend aus oder enthaltend ein Acrylatharz, ein Vinylharz, z.B. Polyvinylacetat, Polyesterharz, Polykondensations- oder Polyadditionsharz, Polyurethanharz, Alkydharz bzw. modifiziertes Alkydharz, Phenolharz, Kohlenwasserstoffharz wie Inden-Cumaronharz, Siliconharz, trocknende pflanzliche und/oder trocknende Öle und/oder physikalisch trocknende Bindemittel auf der Basis eines Natur- und/oder Kunstharzes verwendet.

Das als Bindemittel verwendete Kunstharz kann in Form einer Emulsion, Dispersion oder Lösung, eingesetzt werden. Als Bindemittel können auch Bitumen oder bituminöse Substanzen bis zu 10 Gew.-%, verwendet werden. Zusätzlich können an sich bekannte Farbstoffe, Pigmente, wasserabweisende Mittel, Geruchskorrigentien und Inhibitoren bzw. Korrosionsschutzmittel und dgl. eingesetzt werden.

Bevorzugt ist gemäß der Erfindung als organisch-chemisches Bindemittel mindestens ein Alkydharz bzw. modifiziertes Alkydharz und/oder ein trocknendes pflanzliches Öl im Mittel oder im Konzentrat enthalten. Bevorzugt werden gemäß der Erfindung Alkydharze mit einem Ölgehalt von mehr als 45 Gew.-%, vorzugsweise 50 bis 68 Gew.-%, verwendet.

Das erwähnte Bindemittel kann ganz oder teilweise durch ein Fixierungsmittel(gemisch) oder ein Weichmacher(gemisch) ersetzt werden. Diese Zusätze sollen einer Verflüchtigung der Wirkstoffe sowie einer Kristallisation bzw. der Ausfällung vorbeugen. Vorzugsweise ersetzen sie 0,01 bis 30 % des Bindemittels (bezogen auf 100 % des eingesetzten Bindemittels).

Die Weichmacher stammen aus den chemischen Klassen der Phthalsäureester wie Dibutyl-, Dioctyl- oder Benzylbutylphthalat, Phosphorsäureester wie Tributylphosphat, Adipinsäureester wie Di-(2-ethylhexyl)-adipat, Stearate wie Butylstearat oder Amylstearat, Oleate wie Butyloleat, Glycerinether oder höhermolekulare Glykolether, Glycerinester sowie p-Toluolsulfonsäureester.

Fixierungsmittel basieren chemisch auf Polyvinylalkylethern wie z.B. Polyvinylmethylether oder Ketonen wie Benzophenon, Ethylenbenzophenon.

Als Lösungs- bzw. Verdünnungsmittel kommt insbesondere auch Wasser in Frage, gegebenenfalls in Mischung mit einem oder mehreren der oben genannten organisch-chemischen Lösungs- bzw. Verdünnungsmittel, Emulgatoren und Dispergatoren.

Ein besonders effektiver Holzschutz wird durch großtechnische Imprägnierverfahren, z.B. Vakuum, Doppelvakuum oder Druckverfahren, erzielt.

Die anwendungsfertigen Mittel können gegebenenfalls noch weitere Insektizide und gegebenenfalls noch ein oder mehrere Fungizide enthalten.

Als zusätzliche Zumischpartner kommen vorzugsweise die in der WO 94/29 268 genannten Insektizide und Fungizide in Frage. Die in diesem Dokument genannten Verbindungen sind ausdrücklicher Bestandteil der vorliegenden Anmeldung.

Ganz besonders bevorzugte Zumischpartner können Insektizide, wie Chlorpyriphos, Phoxim, Silafluofin, Alphamethrin, Cyfluthrin, Cypermethrin, Deltamethrin, Permethrin, Imidacloprid, NI-25, Flufenoxuron, Hexaflumuron und Triflumuron, sowie Fungizide wie Epoxyconazole, Hexaconazole, Azaconazole, Propiconazole, Tebuconazole, Cyproconazole, Metconazole, Imazalil, Dichlorfluanid, Tolylfluanid, 3-Iod-2-propinyl-butylcarbamat, N-Octyl-isothiazolin-3-on und 4,5-Dichlor-N-octylisothiazolin-3-on, sein.

Die Wirkstoffe eignen sich auch zur Bekämpfung von tierischen Schädlingen, insbesondere von Insekten, Spinnentieren und Milben, die in geschlossenen Räumen, wie beispielsweise Wohnungen, Fabrikhallen, Büros, Fahrzeugkabinen u.ä. vorkommen. Sie können zur Bekämpfung dieser Schädlinge allein oder in Kombination mit anderen Wirk- und Hilfsstoffen in Haushaltsinsektizid-Produkten verwendet werden. Sie sind gegen sensible und resistente Arten sowie gegen alle Entwicklungsstadien wirksam. Zu diesen Schädlingen gehören:

Aus der Ordnung der Scorpionidea z.B. Buthus occitanus.

Aus der Ordnung der Acarina z.B. Argas persicus, Argas reflexus, Bryobia ssp., Dermanyssus gallinae, Glyciphagus domesticus, Omithodorus moubat, Rhipicephalus sanguineus, Trombicula alfreddugesi, Neutrombicula autumnalis, Dermatophagoides pteronissimus, Dermatophagoides forinae.

Aus der Ordnung der Araneae z.B. Aviculariidae, Araneidae.

Aus der Ordnung der Opiliones z.B. Pseudoscorpiones chelifer, Pseudoscorpiones cheiridium, Opiliones phalangium.

Aus der Ordnung der Isopoda z.B. Oniscus asellus, Porcellio scaber.

Aus der Ordnung der Diplopoda z.B. Blaniulus guttulatus, Polydesmus spp..

Aus der Ordnung der Chilopoda z.B. Geophilus spp..

Aus der Ordnung der Zygentoma z.B. Ctenolepisma spp., Lepisma saccharina, Lepismodes inquilinus.

Aus der Ordnung der Blattaria z.B. Blatta orientalies, Blattella germanica, Blattella asahinai, Leucophaea maderae, Panchlora spp., Parcoblatta spp., Periplaneta australasiae, Periplaneta americana, Periplaneta brunnea, Periplaneta fuliginosa, Supella longipalpa.

Aus der Ordnung der Saltatoria z.B. Acheta domesticus.

Aus der Ordnung der Dermaptera z.B. Forficula auricularia.

Aus der Ordnung der Isoptera z.B. Kalotermes spp., Reticulitermes spp.

Aus der Ordnung der Psocoptera z.B. Lepinatus spp., Liposcelis spp.

Aus der Ordnung der Coleptera z.B. Anthrenus spp., Attagenus spp., Dermestes spp., Latheticus oryzac, Necrobia spp., Ptinus spp., Rhizopertha dominica, Sitophilus granarius, Sitophilus oryzac, Sitophilus zeamais, Stegobium paniceum.

Aus der Ordnung der Diptera z.B. Aedes aegypti, Aedes albopictus, Aedes taeniorhynchus, Anopheles spp., Calliphora erythrocephala, Chrysozona pluvialis, Culex quinquefasciatus, Culex pipiens, Culex tarsalis, Drosophila spp., Fannia canicularis, Musca domestica, Phlebotomus spp., Sarcophaga carnaria, Simulium spp., Stomoxys calcitrans, Tipula paludosa.

Aus der Ordnung der Lepidoptera z.B. Achroia grisella, Galleria mellonella, Plodia interpunctella, Tinea cloacella, Tinea pellionella, Tineola bisselliella.

Aus der Ordnung der Siphonaptera z.B. Ctenocephalides canis, Ctenocephalides felis, Pulex irritans, Tunga penetrans, Xenopsylla cheopis.

Aus der Ordnung der Hymenoptera z.B. Camponotus herculeanus, Lasius fuliginosus, Lasius niger, Lasius umbratus, Monomorium pharaonis, Paravespula spp., Tetramorium caespitum.

Aus der Ordnung der Anoplura z.B. Pediculus humanus capitis, Pediculus humanus corporis, Phthirus pubis.

Aus der Ordnung der Heteroptera z.B. Cimex hemipterus, Cimex lectularius, Rhodinus prolixus, Triatoma infestans.

Die Anwendung im Bereich der Haushaltsinsektizide erfolgt allein oder in Kombination mit anderen geeigneten Wirkstoffen wie Phosphorsäureestem, Carbamaten, Pyrethroiden, Wachstumsregulatoren oder Wirkstoffen aus anderen bekannten Insektizidklassen.

Die Anwendung erfolgt in Aerosolen, drucklosen Sprühmitteln, z.B. Pump- und Zerstäubersprays, Nebelautomaten, Foggern, Schäumen, Gelen, Verdampferprodukten mit Verdampferplättchen aus Cellulose oder Kunststoff, Flüssigverdampfern, Gelund Membranverdampfern, propellergetriebenen Verdampfern, energielosen bzw. passiven Verdampfungssystemen, Mottenpapieren, Mottensäckchen und Mottengelen, als Granulate oder Stäube, in Streuködem oder Köderstationen.

Die Herstellung und die Verwendung der erfindungsgemäßen Wirkstoffe gehen aus den nachfolgenden Beispielen hervor.

### Beispiele

### Allgemeine Arbeitsvorschrift

0,979 g (1,00 mmol) Bis-Aminoverbindung der Formel (II), 6,18-Di-(4-Aminobenzyl)-3,9,15,21-tetraisobutyl-4,10,12,16,22,24-hexamethyl-1,7,13,19-tetraoxa-4,10,-16,22-tetraaza-cyclotetracosan-2,5,8,11,14,17,20,23-octaon, und 3,8 mmol Bistosylat (entsprechend Formel (III-b); hergestellt aus dem entsprechenden Diol) werden in 10 ml Propionitril im Gegenwart von 0,40 g (3,8 mmol) Natriumcarbonat und 1,40 g (3,8 mmol) Tetra(n-butyl)ammoniumiodid für 5 bis 12 h bei 100°C umgesetzt.

Zur Aufarbeitung wird die Reaktionslösung mit Ethylacetat verdünnt und mit halbgesättigter Ammoniumchlorid-Lsg., gesättigter Natriumhydrogencarbonat-Lsg. und gesättigter Kochsalzlösung gewaschen. Die organische Phase wird über Magnesiumsulfat getrocknet und im Vakuum eingeengt. Das Produkt wird durch Säulenchromatographie (stationäre Phase: Kieselgel; mobile Phase: Ethylacetat/Cyclohexan) gereinigt.

### Beispiele 1-9

Gemäß der allgemeinen Vorschrift wurden die folgenden Verbindungen der Formel (I-1) bis (1-9) hergestellt.

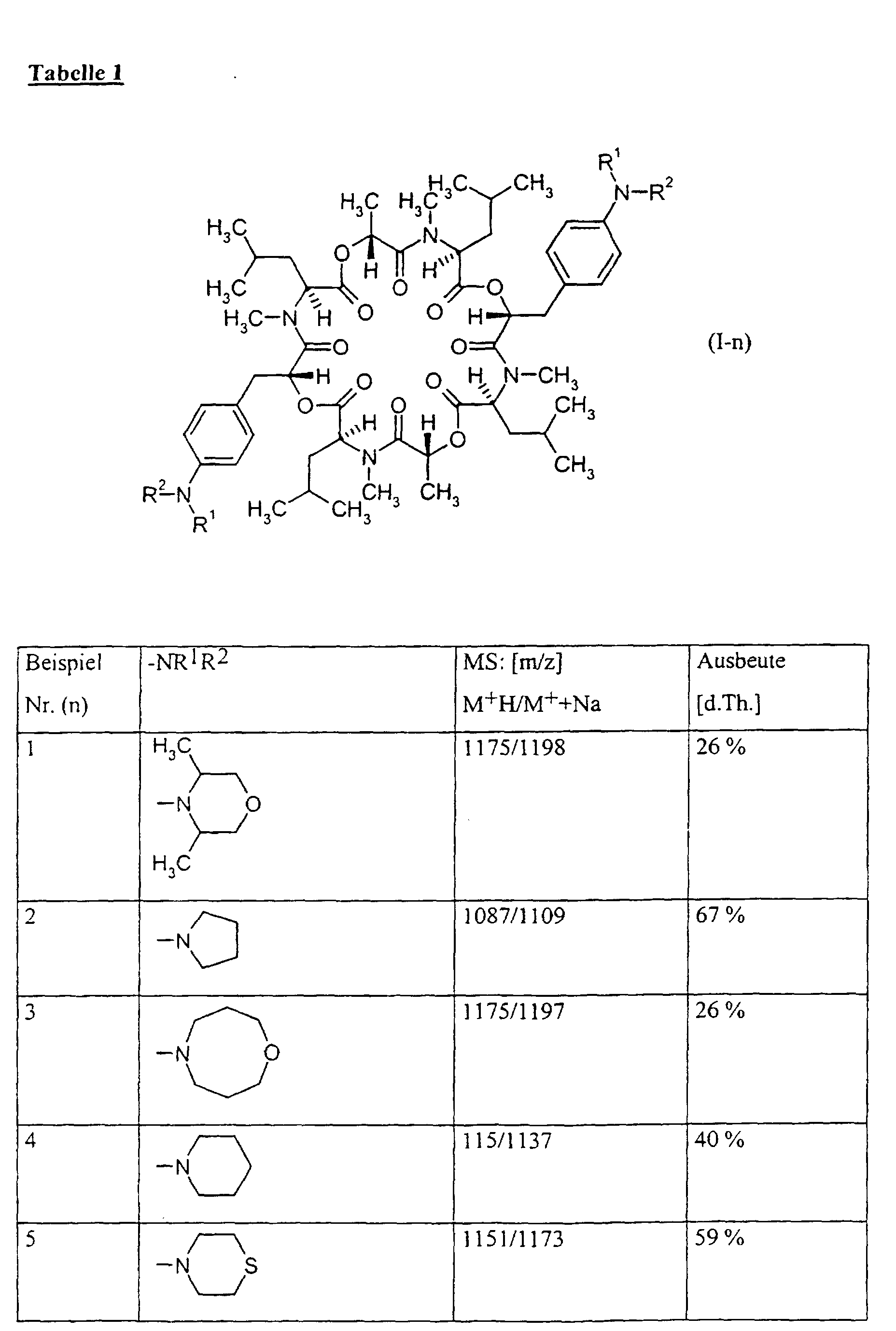

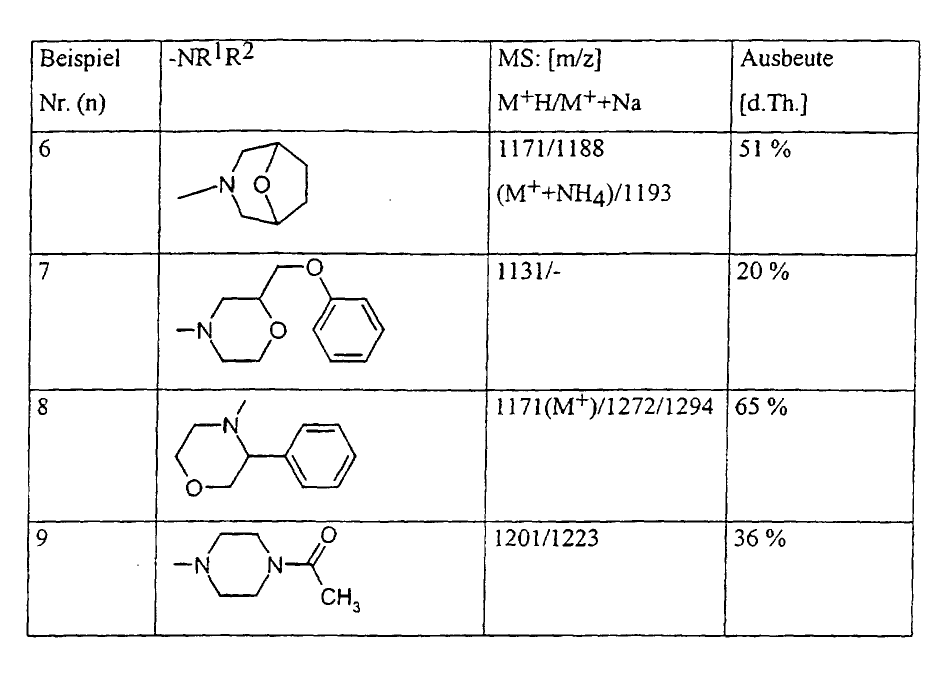

### Biologische Beispiele

### Beispiel A

### Heliothis virescens-Test

| | |
|---|---|
| Lösungsmittel | 3 Gewichtsteile Dimethylformamid |
| Emulgator | 1 Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Sojatriebe (Glycine max) werden durch Tauchen in die Wirkstoffzubereitung der gewünschten Konzentration behandelt und mit Heliothis virescens-Raupen besetzt, solange die Blätter noch feucht sind.

Nach der gewünschten Zeit wird die Abtötung in % bestimmt. Dabei bedeutet 100%, dass alle Raupen abgetötet wurden; 0% bedeutet, dass keine Raupen abgetötet wurden.

Bei diesem Test zeigen z.B. die folgenden Verbindungen der Herstellungsbeispiele gute Wirksamkeit:

| **Beispiel** | **Wirkstoffkonzentration ppm** | **Abtötungsgrad in % nach 6 Tagen** |
|---|---|---|
| 1 | 200 | 100 |
| 2 | 1000 | 100 |
| 3 | 1000 | 100 |

### Beispiel B

### Phaedon-Larven-Test

| | |
|---|---|
| Lösungsmittel | 3 Gewichtsteile Dimethylformamid |
| Emulgator | 1 Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (Brassica oleracea) werden durch Tauchen in die Wirkstoffzubereitung der gewünschten Konzentration behandelt und mit Larven des Meerrettichkäfers (Phaedon cochleariae) besetzt, solange die Blätter noch feucht sind.

Nach der gewünschten Zeit wird die Abtötung in % bestimmt. Dabei bedeutet 100%, dass alle Käferlarven abgetötet wurden; 0% bedeutet, dass keine Käferlarven abgetötet wurden.

Bei diesem Test zeigen z.B. die folgenden Verbindungen der Herstellungsbeispiele gute Wirksamkeit:

| **Beispiel** | **Wirkstoffkonzentration ppm** | **Abtötungsgrad in % nach 6 Tagen** |
|---|---|---|
| 1 | 200 | 100 |
| 3 | 200 | 100 |

### Beispiel C

### Plutella-Test

| | |
|---|---|
| Lösungsmittel | 3 Gewichtsteile Dimethylformamid |
| Emulgator | 1 Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (Brassica oleracea) werden durch Tauchen in die Wirkstoffzubereitung der gewünschten Konzentration behandelt und mit Raupen der Kohlschabe (Plutella xylostella) besetzt, solange die Blätter noch feucht sind.

Nach der gewünschten Zeit wird die Abtötung in % bestimmt. Dabei bedeutet 100%, dass alle Raupen abgetötet wurden; 0% bedeutet, dass keine Raupen abgetötet wurden.

Bei diesem Test zeigt z.B. die folgende Verbindung der Herstellungsbeispiele gute Wirksamkeit:

| **Beispiel** | **Wirkstoffkonzentration ppm** | **Abtötungsgrad in % nach 6 Tagen** |
|---|---|---|
| 3 | 1000 | 100 |

### Beispiel D

### Plutella-Test/Kunstfutter

| | |
|---|---|
| Lösungsmittel | 1 Gewichtsteil Aceton |
| | 9 Gewichtsteile Methanol |

Zur Herstellung einer zweckmäßigen Wirkstoffzubereitung vermischt man 1 Gewichtsteil Wirkstoff mit der angegebenen Menge Lösungsmittel und verdünnt das Konzentrat mit Methanol auf die gewünschten Konzentrationen.

Auf eine genormte Menge Kunstfutter wird eine angegebene Menge Wirkstoffzubereitung der gewünschten Konzentration pipettiert. Nachdem das Methanol verdunstet ist, wird je Kavität eine mit ca. 100 Plutella-Eiem belegter Filmdosendeckel aufgesetzt. Die frisch geschlüpften Larven wandern auf das behandelte Kunstfutter.

Nach der gewünschten Zeit wird die Abtötung in % bestimmt. Dabei bedeutet 100%, dass alle Tiere abgetötet wurden; 0% bedeutet, dass keine Tiere abgetötet wurden.

Bei diesem Test zeigen z.B. die folgenden Verbindungen der Herstellungsbeispiele gute Wirksamkeit:

| **Beispiel** | **Wirkstoffkonzentration ppm** | **Abtötungsgrad in % nach 6 Tagen** |
|---|---|---|
| 5 | 1000 | 100 |

### Beispiel E

### Plutella-Test/Symptomatologie-Untersuchung

| | |
|---|---|
| Lösungsmittel | Aceton |

Zur Herstellung einer zweckmäßigen Wirkstoffzubereitung vermischt man 10 mg Wirkstoff mit 1 ml Lösungsmittel.

Raupen der Kohlschabe (Plutella xylostella) werden 1 µl der so hergestellten Lösung verabreicht.

Nach der gewünschten Zeit wird die Abtötung in % bestimmt. Dabei bedeutet 100%, dass alle Raupen abgetötet wurden; 0% bedeutet, dass keine Raupen abgetötet wurden.

Bei diesem Test zeigen z.B. die folgenden Verbindungen der Herstellungsbeispiele gute Wirksamkeit:

| **Beispiel** | **Wirkstoffkonzentration in µg/Larve** | **Abtötungsgrad in % nach 1 Tag** |
|---|---|---|
| 1 | 10 | 100 |

### Beispiel F

### Spodoptera frugiperda-Test

| | |
|---|---|
| Lösungsmittel | 31 Gewichtsteile Aceton |
| Emulgator | 1 Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (Brassica oleracea) werden durch Tauchen in die Wirkstoffzubereitung der gewünschten Konzentration behandelt und mit Raupen des Heerwurms (Spodoptera frugiperda) besetzt, solange die Blätter noch feucht sind.

Nach der gewünschten Zeit wird die Abtötung in % bestimmt. Dabei bedeutet 100%, dass alle Raupen abgetötet wurden; 0% bedeutet, dass keine Raupen abgetötet wurden.

Bei diesem Test zeigen z.B. die folgenden Verbindungen der Herstellungsbeispiele gute Wirksamkeit:

| **Beispiel** | **Wirkstoffkonzentration ppm** | **Abtötungsgrad in % nach 6 Tagen** |
|---|---|---|
| 1 | 1000 | 100 |
| 2 | 1000 | 100 |
| 3 | 1000 | 100 |

### Beispiel G

### Tetranychus-Test (OP-resistent/Tauchbehandlung)

| | |
|---|---|
| Lösungsmittel | 7 Gewichtsteile Dimethylformamid |
| Emulgator | 1 Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Bohnenpflanzen (Phaseolus vulgaris), die stark von allen Stadien der gemeinen Spinnmilbe (Tetranychus urticae) befallen sind, werden in eine Wirkstoffzubereitung der gewünschten Konzentration getaucht.

Nach der gewünschten Zeit wird die Wirkung in % bestimmt. Dabei bedeutet 100%, dass alle Spinnmilben abgetötet wurden; 0% bedeutet, dass keine Spinnmilben abgetötet wurden.

Bei diesem Test zeigen z.B. die folgenden Verbindungen der Herstellungsbeispiele gute Wirksamkeit:

| **Beispiel** | **Wirkstoffkonzentration ppm** | **Abtötungsgrad in % nach 7 Tagen** |
|---|---|---|
| 1 | 200 | 100 |
| 3 | 200 | 99 |

### Beispiel H

### Meloidogyne-Test

| | |
|---|---|
| Lösungsmittel | 4 Gewichtsteile Aceton |
| Emulgator | 1 Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Gefäße werden mit Sand, Wirkstofflösung, Meloidogyne incognita-Ei-Larvensuspension und Salatsamen gefüllt. Die Salatsamen keimen und die Pflänzchen entwickeln sich. An den Wurzeln entwickeln sich die Gallen.

Nach der gewünschten Zeit wird die nematizide Wirkung an Hand der Gallenbildung in % bestimmt. Dabei bedeutet 100 %, dass keine Gallen gefunden wurden; 0 % Wirkung bedeutet, dass die Zahl der Gallen an den behandelten Pflanzen der der unbehandelten Kontrolle entspricht.

Wirkstoffe, Aufwandmengen und Resultate gehen aus der nachstehenden Tabelle hervor:

| **Beispiel** | **Wirkstoffkonzentration in ppm** | **Abtötungsgrad in %** |
|---|---|---|
| 1 | 20 | 100 |
| 3 | 20 | 100 |

### Beispiel I

### Schabentest

| | |
|---|---|
| Testtiere | Larven (L4) von *Periplaneta americana* |
| Lösungsmittel | Dimethylsulfoxid |

20 mg Wirkstoff werden in 1 ml Dimethylsulfoxid gelöst, geringere Konzentrationen werden durch verdünnen mit destilliertem Wasser hergestellt.

4 Testtiere werden in die zu testende Wirkstoffzubereitung 1 Minute getaucht.

Nach Überführung in Plastikbecher und 7 Tagen Aufbewahrung in einem klimatisierten Raum wird der Abtötungsgrad bestimmt.

Dabei bedeutet 100 %, dass alle Schaben abgetötet wurden, 0 % bedeutet, dass keine Schaben abgetötet wurden.

Bei diesem Test zeigen z.B. die folgenden Verbindungen der Herstellungsbeispiele überlegene Wirkung gegenüber dem Stand der Technik:

| **Beispiel** | **Wirkstoffkonzentration in ppm** | **% Wirkung/Abtötung** |
|---|---|---|
| 1 | 100 | 50 |

### Beispiel J

### Test mit Katzenflöhen / orale Aufnahme

| | |
|---|---|
| Testtiere | Adulte von *Clenocephalides felis* |
| Lösungsmittel | Dimethylsulfoxid (DMSO) |

Zwecks Herstellung einer geeigneten Formulierung wird aus 20 mg Wirkstoff mit 1 ml DMSO eine geeignete Wirkstofflösung hergestellt. 17,5 µl dieser Formulierung werden zu 3.5 ml citriertem Rinderblut gegeben und verrührt.

20 nüchterne adulte Flöhe (*Cienocephalides felis*, Stamm "Georgi") werden in eine Kammer(⌀2.5 cm) eingesetzt, die oben und unten mit Gaze verschlossen ist. Auf die Kammer wird ein Metallzylinder gestellt, dessen Unterseite mit Parafilm verschlossen ist. Der Zylinder enthält 3 ml Blut-Wirkstofformulierung, die von den Flöhen durch die Parafilmmembran aufgenommen werden kann. Während das Blut auf 37°C erwämlt wird, wird im Bereich der Flohlkammern eine Temperatur von 25°C eingestellt. Kontrollen werden mit dem gleichen Volumen DMSO ohne Zusatz einer Verbindung vermischt. Es werden Dreifach-Bestimmungen durchgeführt.

Nach 28h wird die Mortalität in % (= tote Flöhe) bestimmt.

Verbindungen die innerhalb von 28h eine mindestens 25%ige Abtötung der Flöhe erzielen werden als wirksam beurteilt.

| **Beispiel** | **Wirkstoffkonzentration in ppm** | **% Wirkung** |
|---|---|---|
| 1 | 100 | 100 |
| 2 | 100 | 91 |
| 3 | 100 | 100 |
| 4 | 100 | 100 |
| 5 | 100 | 64 |
| 6 | 100 | 80 |

### Beispiel K

### Test mit Fliegen

| | |
|---|---|
| Testtiere | adulte *Musca domesrica,* Stamm Reichswald (OP, SP, Carbamat-resistent) |
| Lösungsmittel | Dimethylsulfoxid |

20 mg Wirkstoff werden in 1 ml Dimethylsulfoxid gelöst, geringere Konzentrationen werden durch verdünnen mit destilliertem H₂O hergestellt.

2 ml dieser Wirkstoffzubereitung werden auf Filterpapierschalen (⌀ 9,5 cm) pipettiert, die sich in Petrischalen entsprechender Größe befinden. Nach Trocknung der Filterscheiben werden 25 Testtiere in die Petrischalen überführt und abgedeckt.

Nach 1, 3, 5, 24 und 48 Stunden wird die Wirksamkeit der Wirkstoffzubereitung ermittelt. Dabei bedeutet 100 %, dass alle Fliegen abgetötet wurden; 0 % bedeutet, dass keine Fliegen abgetötet wurden.

Bei diesem Test zeigen z.B. die folgenden Verbindungen der Herstellungsbeispiele überlegene Wirkung gegenüber dem Stand der Technik:

| **Beispiel** | **Wirkstoffkonzentration in ppm** | **% Wirkung/Abtötung** |
|---|---|---|
| 1 | 100 | 95 |
| 3 | 100 | 95 |
| 4 | 100 | 20 |
| 7 | 100 | 20 |

### Beispiel L

### Test mit Rinderzecken

| | |
|---|---|
| Testtiere | gesogene Weibchen von *Boophilus microplus* (SP-resistenter Parkhurst-Stamrn) |
| Lösungsmittel | Dimethylsulfoxid |

20 mg Wirkstoff werden in 1 ml Dimethylsulfoxid gelöst, geringere Konzentrationen werden durch verdünnen in dem gleichen Lösungsmittel hergestellt.

Der Test wird in 5-fach-Bestimmung durchgeführt. 1 µl der Lösungen wird in das Abdomen injiziert, die Tiere in Schalen überführt und in einem klimatisierten Raum aufbewahrt. Die Wirkungskontrolle erfolgt nach 7 Tagen auf Ablage fertiler Eier. Eier deren Fertilität nicht äußerlich sichtbar ist, werden in Glasröhrchen bis zum Larvenschlupf im Klimaschrank aufbewahrt. Eine Wirkung von 100 % bedeutet, dass keine Zecke fertile Eier gelegt hat.

Bei diesem Test zeigen z.B. die folgenden Verbindungen der Herstellungsbeispiele überlegene Wirkung gegenüber dem Stand der Technik:

| **Beispiel** | **Wirkstoffkonzentration in µg pro Tier** | **% Wirkung/Abtötung** |
|---|---|---|
| 1 | 20 | 100 |
| 2 | 20 | 100 |
| 3 | 20 | 100 |
| 4 | 20 | 100 |
| 5 | 20 | 80 |
| 6 | 20 | 100 |

### Beispiel M

### Blowfly-Larven-Test / Entwicklungshemmende Wirkung

| | |
|---|---|
| Testtiere | *Lucilia cuprina-Larven* |
| Lösungsmittel | Dimethylsulfoxid |

20 mg Wirkstoff werden in 1 ml Dimethylsulfoxid gelöst, geringere Konzentrationen werden durch verdünnen mit destilliertem Wasser hergestellt.

Etwa 20 Lucilia cuprina-Larven werden in ein Teströhrchen gebracht, welches ca. 1 cm³ Pferdefleisch und 0.5 ml der zu testenden Wirkstoffzubereitung enthält. Nach 24 und 48 Stunden wird die Wirksamkeit der Wirkstoffzubereitung ermittelt. Die Teströhrchen werden in Becher mit Sand-bedecktem Boden überführt. Nach weiteren 2 Tagen werden die Teströhrchen entfernt und die Puppen ausgezählt.

Die Wirkung der Wirkstoffzubereitung wird nach der Zahl der geschlüpften Fliegen nach 1,5-facher Entwicklungsdauer einer unbehandelten Kontrolle beurteilt. Dabei bedeutet 100 %, dass keine Fliegen geschlüpft sind; 0 % bedeutet, dass alle Fliegen normal geschlüpft sind.

Bei diesem Test zeigen z.B. die folgenden Verbindungen der Herstellungsbeispiele überlegene Wirkung gegenüber dem Stand der Technik:

| **Beispiel** | **Wirkstoffkonzentration in ppm** | **% Wirkung/Abtötung (nach 48 Stunden)** |
|---|---|---|
| 1 | 10 | 100 |
| 3 | 10 | 100 |
| 4 | 100 | 100 |
| 5 | 100 | 100 |
| 6 | 100 | 100 |

## Patentansprüche

1. Mittel zur Bekämpfung von tierischen Schädlingen, **gekennzeichnet durch** einen Gehalt der Verbindung der Formel (I) 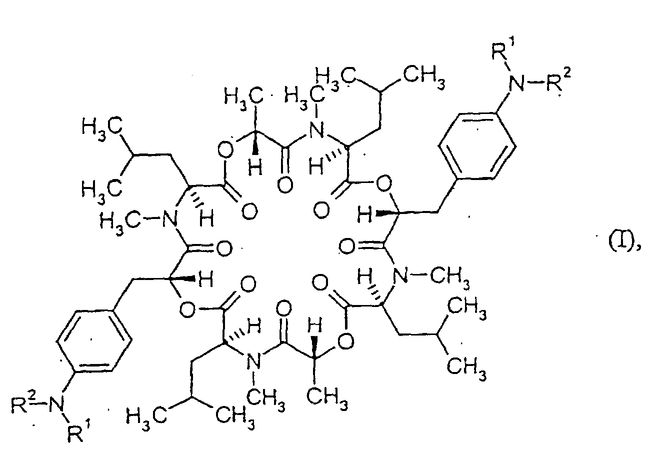 in welcher
R¹ und R² jeweils für C₁₋₆-Alkyl, C₂₋₆-Alkenyl, ω-C₁₋₄-Alkoxy-C₁₋₆-alkyl, ω-Fluor-C₁₋₆-alkyl, ω-Chlor-C₁₋₆-alkyl, ω-Brom-C₁₋₆-alkyl, gegebenenfalls **durch** Fluor; Chlor, Methyl, Methoxy ein bis dreifach substituiertes Phenyl-C₁₋₆-alkyl steht, oder
R¹ und R² gemeinsam mit dem Stickstoffatom, an das sie gebunden sind, für ein oder zweifach **durch** C₁₋₄-Alkyl, Phenoxymethyl, Phenyl, Tolyl, Xylyl, Fluorphenyl oder Chlorphenyl substituiertes Morpholino, **durch** -CH₂-, -(CH₂)₂- oder -(CH₂)₃- 2,6-oder 3,5-überbrücktes Morpholino, für ein oder zweifach **durch** C₁₋₄-Alkyl, Phenoxymethyl, Phenyl, Tolyl, Xylyl, Fluorphenyl oder Chlorphenyl substituiertes 1-Pyrrohdinyl, 1-Piperidinyl, 1-Piperazinyl,
für gegebenenfalls ein oder zweifach **durch** C₁₋₄Alkyl, Phenoxymethyl, Phenyl, Tolyl, Xylyl, Fluorphenyl oder Chlorphenyl substituiertes Hexahydro-1-pyrazinyl, -4-Tetrahydro-1,4-thiazin-1-yl, Hexahydro-1,5-oxazocin-5-yl, wobei gegebenenfalls Stickstoff **durch** C₁₋₄-Alkylcarbonyl substituiert sein kann, steht.

2. Verwendung von Verbindung der Formel (I) gemäß Anspruch 1 zur Bekämpfung von tierischen Schädlingen, mit Ausnahme der Behandlung des menschlichen und tierischen Körpers.

3. Verwendung von Verbindung der Formel (I) gemäß Anspruch 1 zur Bekämpfung von Insekten mit Ausnahme der Behandlung des menschlichen und tierischen Körpers.

4. Verwendung von Verbindung der Formel (I) gemäß Anspruch 1 zur Herstellung eines Mittels zur Behandlung von Krankheiten, die durch tierische Schädlinge hervorgerufen werden.

5. Verwendung von Verbindung der Formel (I) gemäß Anspruch 1 zur Herstellung eines Mittels zur Behandlung von Krankheiten, die durch Insekten hervorgerufen werden.

## Claims

1. Composition for controlling animal pests, **characterized in that** it comprises the compound of the formula (I) 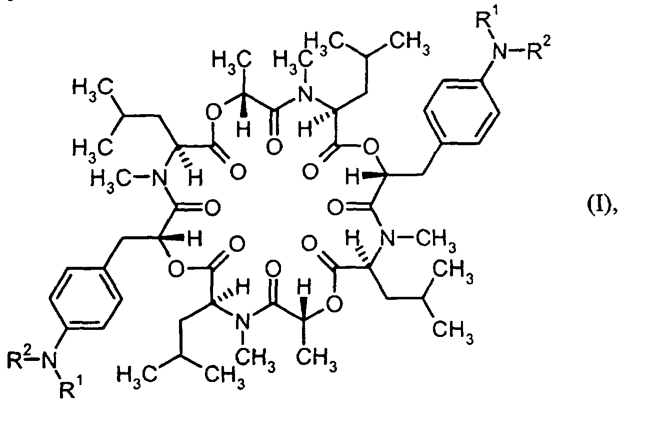 in which
R¹ and R² each represent C₁₋₆-alkyl, C₂₋₆-alkenyl, ω-C₁₋₄-alkoxy-C₁₋₆-alkyl, ω-fluoro-C₁₋₆-alkyl, ω-chloro-C₁₋₆-alkyl, ω-bromo-C₁₋₆-alkyl, phenyl-C₁₋₆-alkyl which is optionally mono- to trisubstituted by fluorine, chlorine, methyl, methoxy, or
R¹ and R² represent, together with the nitrogen atom to which they are attached, morpholino which is mono- or disubstituted by C₁₋₄-alkyl, phenoxymethyl, phenyl, tolyl, xylyl, fluorophenyl or chlorophenyl, morpholino which is 2,6- or 3,5-bridged by -CH₂-, -(CH₂)₂- or -(CH₂)₃-, represent 1-pyrrolidinyl, 1-piperidinyl, 1-piperazinyl which is mono- or disubstituted by C₁₋₄-alkyl, phenoxymethyl, phenyl, tolyl, xylyl, fluorophenyl or chlorophenyl
represent hexahydro-1-pyrazinyl, 4-tetrahydro-1,4-thiazin-1-yl, hexahydro-1,5-oxazocin-5-yl represent optionally mono- or disubstituted by C₁₋₄-alkyl, phenoxymethyl, phenyl, tolyl, xylyl, fluorophenyl or chlorophenyl, where nitrogen may optionally be substituted by C₁₋₄-alkylcarbonyl.

2. Use of the compound of the formula (I) according to Claim 1 for controlling animal pests except for in the treatment of human and animal bodies.

3. Use of the compound of the formula (I) according to Claim 1 for controlling insects except for in the treatment of human and animal bodies.

4. Use of the compound of the formula (I) according to Claim 1 for preparing a composition for treating diseases caused by animal pests.

5. Use of the compound of the formula (I) according to Claim 1 for preparing a composition for treating diseases caused by insects.

## Revendications

1. Composition destinée à la lutte contre des parasites animaux, **caractérisée par** une teneur en composé de formule (I) 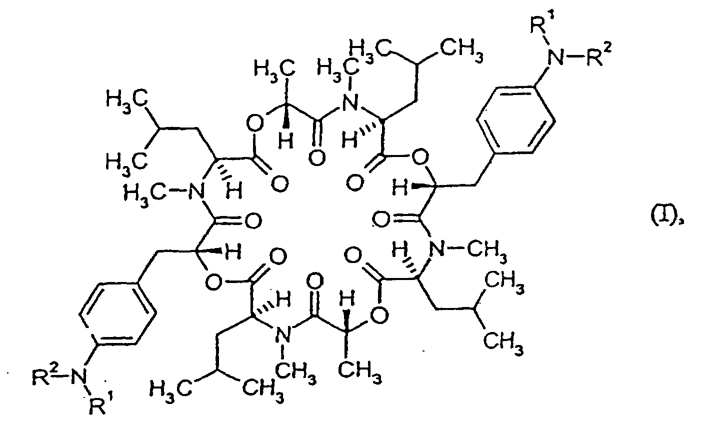 dans laquelle
R¹ et R² représentent chacun un reste alkyle en C₁ à C₆, alcényle en C₂ à C₆, ω- (alkoxy en C₁ à C₄) - (alkyle en C₁ à C₆), ω-fluoralkyle en C₁ à C₆, ω-chloralkyle en C₁ à C₆, ω-bromalkyle en C₁ à C₆, phénylalkyle en C₁ à C₆ éventuellement substitué une à trois par du fluor, du chlore, un radical méthyle, méthoxy, ou bien
R¹ et R² forment, conjointement avec l'atome d'azote auquel ils sont liés, un reste morpholino substitué une ou deux fois par un radical alkyle en C₁ à C₄, phénoxyméthyle, phényle, tolyle, xylyle, fluorophényle ou chlorophényle, un reste morpholino ponté en 2,6 ou en 3,5 par un groupe -CH₂-, - (CH₂) ₂- ou -(CH₂)₃-, des restes 1-pyrrolidinyle, 1-pipéridinyle, 1-pipérazinyle substitués une ou deux fois par un radical alkyle en C₁ à C₄, phénoxyméthyle, phényle, tolyle, xylyle, fluorophényle ou chlorophényle, des restes hexahydro-1-pyrazinyle, 4-tétrahydro-1,4-thiazine-1-yle, hexahydro-1,5-oxazine-5-yle, portant éventuellement un ou deux substituants alkyle en C₁ à C₄, phénoxyméthyle, phényle, tolyle, xylyle, fluorophényle ou chlorophényle, l'azote pouvant éventuellement être substitué par un radical (alkyle en C₁ à C₄)-carbonyle.

2. Utilisation d'un composé de formule (I) suivant la revendication 1 pour la lutte contre des parasites animaux, à l'exception du traitement du corps humain et animal.

3. Utilisation d'un composé de formule (I) suivant la revendication 1 pour la lutte contre des insectes, à l'exception du traitement du corps humain et animal.

4. Utilisation d'un composé de formule (I) suivant la revendication 1 pour la préparation d'une composition destinée au traitement de maladies qui sont engendrées par des parasites animaux.

5. Utilisation d'un composé de formule (I) suivant la revendication 1 pour la préparation d'une composition destinée au traitement de maladies qui sont engendrées par des insectes.
